# DEMANDE DE BREVET EUROPEEN

(11) **EP 2 464 033 A1**
(43) Date de publication de la demande: **13.06.2012**
(21) Numéro de dépôt: 11306620.3
(22) Date de dépôt: 07.12.2011
(51) Int. Cl.: H04B 7/185

(54) **Calculateur embarqué à transmission en mode S**

(30) Priorité: 08.12.2010 FR 1004790
(71) Demandeur: Thales, 92200 Neuilly Sur Seine (FR)
(72) Inventeur: Damblemont, Julien, 92704 Colombes (FR); Erny, Patrick, 92704 Colombes (FR)
(74) Mandataire: Jacobson, Claude

(57) **Abrégé**

Le calculateur embarqué (8) pour avion comporte :
- un processeur (10) propre à exécuter des fonctions opérationnelles conformément à une configuration du calculateur embarqué ;
- des moyens (16) de stockage de la configuration du calculateur embarqué ;
- des moyens (18B, 20) de paramétrage du calculateur embarqué à partir d'informations de paramétrage ;
- une chaîne de transmission (12) en mode S telle que définie par l'ICAO pour la transmission de données opérationnelles du calculateur embarqué vers ou depuis une station au sol ou un autre avion, les données opérationnelles étant traitées par les fonctions opérationnelles exécutées par le calculateur.

La chaîne de transmission (12) est propre à assurer, en mode S, la transmission d'informations de paramétrage vers ou depuis les moyens (18B, 20) de paramétrage.

## Description

La présente invention concerne un calculateur embarqué pour avion, comportant :
- un processeur propre à exécuter des fonctions opérationnelles conformément à une configuration du calculateur embarqué ;
- des moyens de stockage de la configuration du calculateur embarqué ;
- des moyens de paramétrage du calculateur embarqué à partir d'informations de paramétrage ;
- une chaîne de transmission en mode S telle que définie par l'ICAO pour la transmission de données opérationnelles du calculateur embarqué vers ou depuis une station au sol ou un autre avion, les données opérationnelles étant traitées par les fonctions opérationnelles exécutées par le calculateur.

Les avions de toute nature sont équipés de calculateurs embarqués comportant des transpondeurs permettant une communication avec des stations au sol ou entre les avions.

Ces calculateurs embarqués sont propres à transmettre notamment l'altitude et le code d'identification de l'appareil éventuellement complété par une position GPS de celui-ci.

Ces informations sont transmises sur demande ou de manière régulière depuis le calculateur embarqué.

Ces calculateurs utilisent classiquement le protocole mode S pour communiquer avec les stations de contrôle au sol ou les autres avions dans la gamme de fréquence de 1030 à 1090 MHz. Le mode S est défini dans le document « Annex 10 to the Convention on International Civil Aviation » de l'International Civil Aviation Organisation.

Ces calculateurs embarqués nécessitent d'être parfois reconfigurés pour s'adapter aux plateformes existantes, activer/désactiver des fonctions spécifiques en fonction des missions ou travailler dans un mode spécifique comme le mode de maintenance et ainsi télécharger des nouveaux logiciels nécessaires aux opérations de maintenance. Ces opérations de maintenance doivent être réalisées au sol alors que l'avion est immobilisé.

A cet effet, il est connu de munir les calculateurs embarqués d'un connecteur et d'une interface propre à la maintenance permettant la liaison d'un équipement de maintenance, tel qu'un ordinateur portable permettant l'échange d'informations avec le calculateur embarqué.

Ce connecteur propre à la maintenance est associé dans le calculateur embarqué à une interface de communication permettant une transmission bidirectionnelle d'informations avec l'ordinateur portable servant à la maintenance.

Afin d'éviter tout disfonctionnement, il est connu de prévoir dans le calculateur embarqué des moyens tels que la connexion sur le connecteur de maintenance fait passer le calculateur en mode maintenance, interdisant ainsi à celui-ci toute réception ou envoi d'informations en mode S.

Le bus de communication utilisé pour la maintenance est par exemple spécifié dans les nomes ARINC 615 ou 429 pour les applications avioniques civiles, la norme MIL-STD-1553B pour les applications militaires, l'Ethernet ou le bus JTAG pour des applications propriétaires..

Ce mode de maintenance des calculateurs embarqués fonctionne correctement mais celui-ci est relativement long à mettre en oeuvre et conduit à des calculateurs de coût élevé.

Enfin, ces modes de maintenance ne permettent d'intervenir que sur le calculateur à l'arrêt, interdisant d'effectuer des relevés sur le mode de fonctionnement du calculateur alors qu'il est en exploitation.

L'invention a pour but de proposer un calculateur embarqué permettant une maintenance facilitée et dont les moyens propres à la maintenance sont d'un coût réduit.

A cet effet, l'invention a pour objet un calculateur embarqué du type précité, caractérisé en ce que la chaîne de transmission est propre à assurer, en mode S, la transmission d'informations de paramétrage vers ou depuis les moyens de paramétrage.

Suivant des modes particuliers de réalisation, le calculateur embarqué comporte une ou plusieurs des caractéristiques suivantes :
- les moyens de paramétrage du calculateur comportent des moyens de maintenance propres à agir sur la configuration du calculateur embarqué et les informations de paramétrage sont des informations de maintenance transmises vers ou depuis les moyens de maintenance ;
- la chaîne de transmission en mode S est propre à assurer un débit de transmission supérieur pour les données de maintenance au débit de transmission assuré pour les données opérationnelles ;
- la fréquence de transmission de segments des données de maintenance en mode S est supérieure à 100Hz ;
- la chaîne de transmission comporte un processeur comportant des moyens distincts de traitement des données opérationnelles et des données de maintenance et le calculateur embarqué comporte des moyens d'activation exclusive, soit des moyens de traitement des données opérationnelles, dans un mode opérationnel, soit des moyens de traitement des données de maintenance, dans un mode de maintenance ;
- la chaîne de transmission est propre à assurer des transactions en mode S niveau 2 de type COMM-A/COMM-B avec des interrogations/réponses longues parmi les formats de réserve définis par l'ICAO ;
- les moyens de paramétrage du calculateur comportent des moyens d'allocation, en réponse à une requête prédéfinie d'allocation, d'un registre disponible tel que défini par l'ICAO à une adresse mémoire du calculateur dont la valeur doit être transmise par la chaîne de transmission en mode S en tant que données opérationnelles supplémentaires contenue dans le registre alloué et les informations de paramétrages sont au moins une requête prédéfinie d'allocation transmises aux moyens d'allocation ;
- la requête d'allocation comporte des adresses et des registres associés et les moyens d'allocation sont propres à allouer, à chaque adresse, le registre associé ;
- le calculateur comporte une mémoire de configurations et chaque configuration spécifie un ensemble d'adresses du calculateur, et la requête d'allocation comporte une identification d'une configuration et un registre associé et les moyens d'allocation sont propres à allouer le registre associé à toutes les adresses spécifiées par la configuration de sorte que les valeurs simultanées de toutes les adresses de la configuration sont transmises ensemble en mode S en tant que données opérationnelles ;
- le calculateur comporte une mémoire de processus et chaque processus spécifie une adresse du calculateur, et la requête d'allocation comporte une identification d'un processus et un registre associé et les moyens d'allocation sont propres à allouer le registre associé à l'adresse spécifiée d'identification du processus de sorte que la valeur de l'adresse du processus soit transmise en mode S en tant que donnée opérationnelle.

L'invention a également pour objet une installation comportant :
- un calculateur embarqué tel que décrit ci-dessus ; et
- un équipement de maintenance propre à communiquer suivant une liaison mode S avec le calculateur embarqué par l'échange de données de maintenance.

L'invention sera mieux comprise à la lecture de la description qui va suivre, donnée uniquement à titre d'exemple et faite en se référant aux dessins sur lesquels :
- La figure 1 est une vue schématique d'un calculateur embarqué selon l'invention ;
- Les figures 2 et 3 sont des schémas illustrant les transferts de données entre le calculateur embarqué et un équipement de maintenance, et
- La figure 4 est un schéma illustrant les transferts de données entre le calculateur embarqué et un équipement de surveillance.

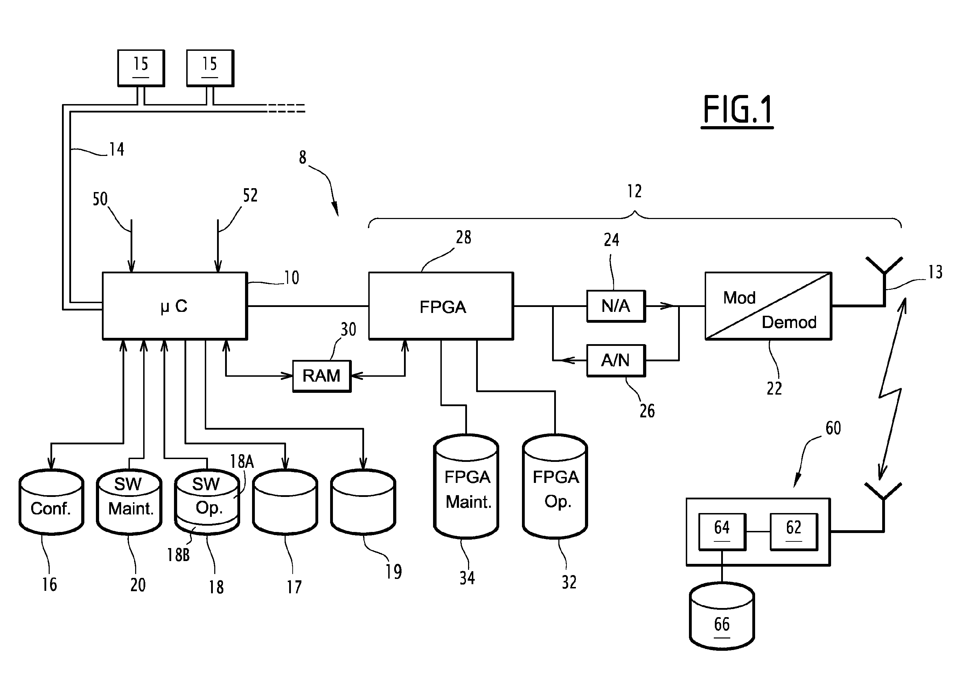

Le calculateur embarqué 8 illustré sur la figure 1 est par exemple un transpondeur Mode S (répondeur).

Il comporte un processeur 10 tel qu'un micro-processeur associé à une chaîne de transmission d'informations 12 au travers d'une antenne 13. Comme connu en soi, le processeur 10 est relié par un bus de transfert d'informations 14 à un ensemble d'équipements 15 de l'avion tel qu'un altimètre, un système de positionnement par satellite ou autre.

Le processeur 10 est associé à un ensemble de mémoires comportant des données de configuration 16, une zone d'enregistrement d'événements en vol 17 (pannes, données temps-réel de navigation), un logiciel de traitement opérationnel 18 assurant le fonctionnement normal du calculateur, une table 19 de correspondance adresse-registre et un logiciel de maintenance 20 assurant la gestion des opérations de maintenance, notamment pour la modification de la configuration 16, ou le chargement des logiciels de traitement opérationnel.

La chaîne de transmission 12 comporte comme connu en soi depuis l'antenne 13 un modulateur/ démodulateur 22 suivi d'un convertisseur numérique/ analogique 24 et d'un convertisseur analogique/ numérique 26 montés en parallèle et propres à convertir le signal suivant le sens de la communication.

Elle comporte ensuite un processeur 28 tel qu'un processeur de traitement du signal de type FPGA propre à traiter les informations transmises depuis ou vers le calculateur et à les convertir en un format interprétable par le processeur 10 ou propre à être émis depuis l'antenne 13. Une mémoire tampon 30, constituée par exemple d'une RAM et formant une messagerie partagée, assure la communication entre le processeur 10 et le processeur 28.

Le processeur 28 comporte une zone programmée 32 propre à gérer les transmissions opérationnelles schématisée sur la figure 1 par un stockage de données.

Comme connu en soi, la zone opérationnelle 32 du processeur 28 est propre à recevoir et transmettre des informations en mode S au travers de l'antenne 13 ou pour mettre en forme les informations reçues en mode S pour les rendre interprétables par le processeur 10. La zone opérationnelle 32 du processeur 28 et le logiciel de traitement opérationnel 18 du processeur 10 se répartissent les traitements afin d'implémenter les fonctionnalités du transpondeur Mode S conformément aux prescriptions du document « Annex 10 to the Convention on International Civil Aviation Organization » de l'International Civil Aviation Organisation (ICAO).

En particulier, le logiciel de traitement opérationnel 18 assure, à partir des données stockées dans la table 19, la création des messages de réponse DF en disposant dans les registres identifiés les valeurs contenues dans les adresses mémoires correspondantes telles que définies par la table 19.

A cet effet, la table 19 comporte pour chaque registre alloué à une donnée suivant la prescription de l'ICAO, l'adresse à laquelle la donnée est présente si cette adresse existe dans le calculateur. De nombreux registres sont laissés sans affectation dans la prescription de l'ICAO et ceux-ci n'ont donc a priori pas d'adresses correspondantes.

Le logiciel de traitement opérationnel 18 comporte un module 18A de gestion de transmission en mode S propre à assurer l'interprétation des messages montants reçus en mode S (interrogations UF) et l'établissement de messages descendants de réponse en mode S (réponses DF) ensuite adressés par la chaîne de transmission 12 vers le sol.

Cette transmission s'effectue de préférence en mode S niveau 2 qui est le niveau minimum requis pour un transpondeur Mode S. La transaction transmise par un interrogateur mode S (Station sol, Aéronef militaire ou de surveillance) s'effectue en COMM-A par le biais d'interrogations longues UF20 ou UF21. Dans le sens descendant, c'est-à-dire depuis l'avion vers la station interrogatrice, le protocole de transmission mode S utilisé est appelé COMM-B. Les transferts de données s'effectuent par le biais de réponses longues DF20 ou DF21, les données étant actualisées dans le champ MB de 56 bits contenu dans chacune de ces réponses. Respectivement, dans le sens montant, le protocole de transmission mode S utilisé est appelé COMM-A. En transmission COMM-A, ce sont les interrogations UF20 ou UF21 qui permettent le transfert de données, par l'actualisation du champ MA également de 56 bits contenu dans chacune des interrogations.

Le cadencement des émissions, et notamment la fréquence de transmission des messages, est régi, comme connu en soi, par le processeur 28. Les segments d'interrogation, et de réponse en mode S sont de 34 microsecondes et 120 microsecondes respectivement. La fréquence des interrogations est égale à 60 Hz ou inférieure pour la transmission des informations entre le calculateur embarqué et une station au sol ou un autre avion.

Selon l'invention, la chaîne de transmission 12 comporte des moyens de transmission d'informations de maintenance suivant le mode S vers et depuis un équipement de maintenance dédié 60 propre à établir une communication courte distance en mode S pour les seuls besoins de la maintenance.

A cet effet, le processeur 28 comporte une zone de traitement 34 spécifique au traitement des informations de maintenance schématisée sur la figure 1 par un stockage de données.

Le processeur 10 comporte des moyens pour commuter le processeur 28 d'un état opérationnel dans lequel il met en oeuvre sa seule zone opérationnelle 32 à un mode de maintenance dans lequel il met en oeuvre sa seule zone de maintenance 34. Ces moyens assurent également une commutation de processeur 10 lui-même pour l'application soit du logiciel de traitement opérationnel 18, soit du logiciel de maintenance 20.

A cet effet, le processeur 10 présente une entrée 50 de liaison à un capteur d'état du train d'atterrissage propre à détecter que le train d'atterrissage est écrasé et que l'avion est donc posé au sol. Il comporte en outre une entrée 52 pour une information de commandes de maintenance activable par un opérateur.

Lorsque les deux conditions sont remplies, à savoir que l'avion est détecté comme au sol et qu'une information de maintenance est détectée sur l'entrée 52, le processeur 10 et le processeur 28 sont commutés en mode maintenance.

Dans ce mode, la chaîne de transmission 32 est propre à recevoir et envoyer des interrogations et des réponses suivant le mode S à une fréquence supérieure à la fréquence de transmission opérationnelle des informations. Elle est notamment supérieure à 100 Hz, de préférence supérieure à 1000 Hz, et inférieure à 5000 Hz. A cet effet, les convertisseurs numérique/analogique 24 et analogique/numérique 26, ainsi que le processeur 28 et les moyens de modulation 22 sont adaptés pour un traitement rapide des données.

L'équipement 60 comporte une chaîne de transmission 62 en mode S de même type que la chaîne 12 mais dépourvue de la zone de traitement opérationnel 32. Cette chaîne de transmission est propre à émettre à courte distance, c'est-à-dire à une distance inférieure à 1 km.

L'équipement comporte en outre une unité de traitement d'informations 64 et des moyens de stockage 66 pour des informations de maintenance à transmettre ou à recevoir du calculateur embarqué.

Les données de maintenance sont transmises en mode S en utilisant les 83 bits disponibles dans les formats d'interrogation en réserve. Depuis l'équipement 60 vers le calculateur 10, les données de maintenance sont transmises en mode S en utilisant les formats d'interrogation de réserve définis dans le document « ICAO Annex 10 ». Il s'agit de « Unassigned coding space » tels que définis au point 3.1.2.3.2.2 de ce document. Il s'agit de l'un au moins des formats parmi les 13 formats suivants : UF1, UF2, UF3, UF6, UF7, UF8, UF9, UF10, UF12, UF13, UF14, UF15 ou UF23. Sur les 112 bits de l'interrogation, 83 bits présents entre les champs UF et AP (les champs UF de 5 bits et AP de 24 bits étant réservés aux besoins élémentaires de reconnaissance et intégrité du message en Mode S) sont disponibles pour véhiculer les données à transférer. Chaque interrogation caractérise un segment de donnée ou trame transmis entre l'équipement de maintenance 60 et le calculateur embarqué 10.

Depuis le calculateur 10 vers l'équipement 60, les données de maintenance sont transmises en mode S en utilisant les formats de réponse de réserve (Unassigned coding space) définis dans le document « ICAO Annex 10 » tel qu'un format parmi les 13 formats suivants : DF1, DF2, DF3, DF6, DF7, DF8, DF9, DF10, DF12, DF13, DF14, DF15 ou DF23. Sur les 112 bits de la réponse, 83 bits présents entre les champs DF et P (les champs DF de 5 bits et P de 24 bits étant réservés aux besoins élémentaires de reconnaissance et intégrité du message en Mode S) sont disponibles pour véhiculer les données à transférer. Chaque réponse caractérise un segment de donnée ou trame transmis entre le calculateur embarqué 10 et l'équipement de maintenance 60.

Suivant encore un autre mode de réalisation, la chaîne 12 comporte un décodeur mode S niveau 2 et un mécanisme de transfert de données équivalent à ceux employés lors de communication Mode S en niveaux 3 et 4 via les échanges d'interrogation/réponse UF24/DF24 (application des protocoles COMM-C/COMM-D définis dans le document ICAO Annex 10) dans le contenu des échanges UFx/DFx(x représentant le numéro de format en réserve parmi les 13 formats de réserve : 1, 2, 3, 6, 7, 8, 9, 10, 12, 13, 14, 15 ou 23) permettant ainsi un transfert par paquet et une optimisation de la bande passante Dans le sens équipement 60 vers le calculateur 10, typiquement pour un téléchargement de fichier, chaque interrogation UFx transmise par l'équipement 60 est considérée comme un segment de données. Le format UFx est structuré de la manière suivante :
- Bit 1 à 5 : format x de 5 bits
- Bit 6 à 7 : champ RC de 2 bits fournit le type de segment à transférer
- Bit 8 à 11 : champ NC de 4 bits fournit le numéro de segment (1 à 16) dans le paquet
- Bit 12 à 88 : 77 bits utiles pour les données à transmettre
- Bit 89 à 112 : champ AP.

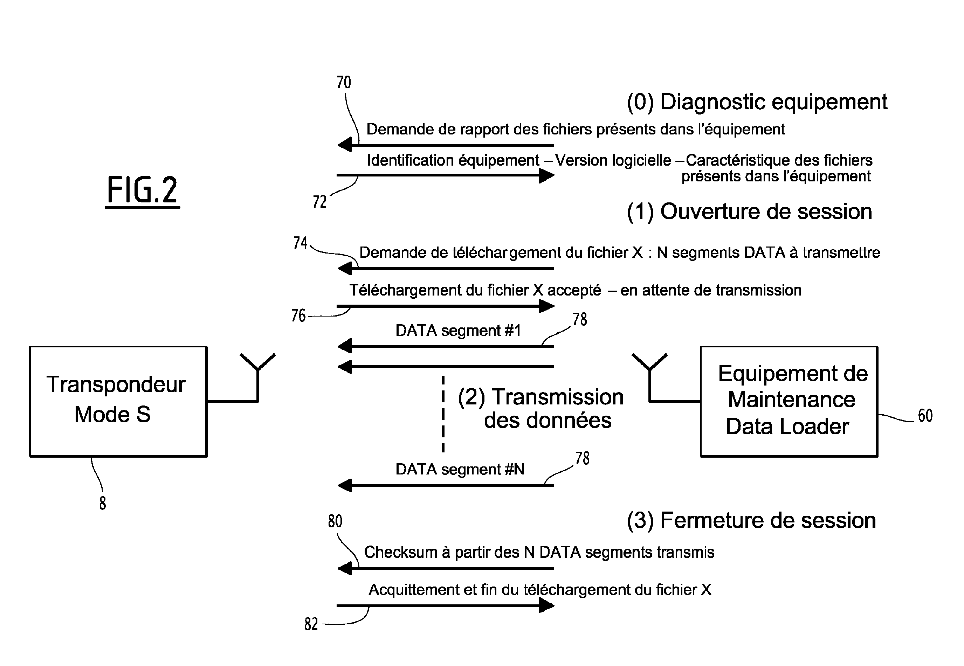

Sur la figure 2 sont représentés à titre d'exemple les échanges d'informations au travers de la liaison mode S entre un équipement embarqué 8 et l'équipement de maintenance 60.

Après que la chaîne de transmission et le processeur 10 ont été commutés en mode maintenance, l'équipement de maintenance 60 émet lors d'une phase de diagnostic un premier message 70 de demande de rapport des fichiers présents dans le calculateur embarqué. Par une réponse 72, le calculateur embarqué donne son identification, sa version logicielle et les caractéristiques des fichiers présents dans sa configuration.

Par un message 74 l'équipement de maintenance demande, pour l'ouverture de la session, le téléchargement d'un fichier déterminé constitué de N segments de données.

L'équipement embarqué 8 confirme par le message 76 son acceptation du téléchargement du fichier déterminé et se place en attente de transmission.

Au cours des transmissions successives 78, l'équipement de maintenance émet les N segments constituant le fichier.

Une phase de fermeture de session achève la transmission, l'équipement de maintenance transmettant un message de contrôle 80, suite à quoi le calculateur embarqué adresse un message d'acquittement 82 mettant fin à la transaction.

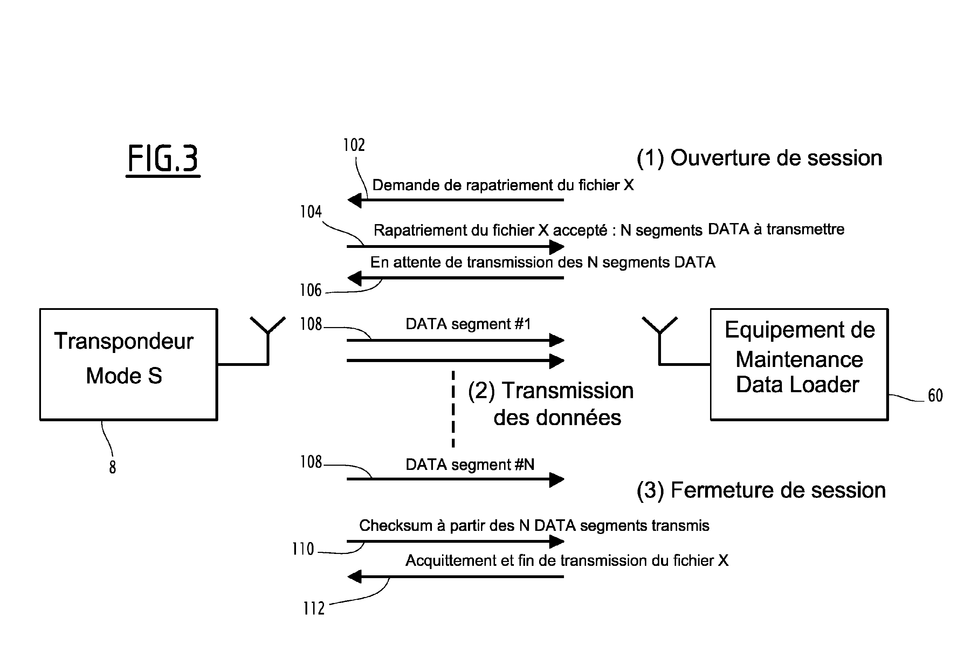

Pour la récupération de fichiers depuis le calculateur embarqué, et comme illustré sur la figure 3, l'équipement de maintenance 60 formule une demande 102 de rapatriement d'un fichier pour l'ouverture d'une session auquel le calculateur embarqué 8 renvoie une acceptation 104 du rapatriement de fichier en indiquant le nombre N de segments de données à transmettre.

L'équipement de maintenance avertit en 106 qu'il est en attente de transmission des N segments.

Suivant N transmissions 108, les segments de données sont transmis un à un lors d'une phase de transmission de données.

Un compteur de vérification 110 est ensuite adressé par le calculateur embarqué à l'équipement de maintenance, lequel adresse en 112 un acquittement, conduisant à la fin de la transaction.

Par un tel agencement, la maintenance du calculateur embarqué se fait simplement sans qu'il soit nécessaire de brancher un connecteur et donc d'accéder au calculateur embarqué. Le coût se trouve réduit du fait de l'utilisation de la même liaison mode S pour les échanges opérationnels et pour la maintenance.

Suivant un autre aspect de l'invention, le logiciel de traitement opérationnel 18 comprend en outre un module 18B d'allocation dans la table 19 d'un registre disponible tel que défini par l'ICAO à une adresse mémoire du calculateur en réponse à une requête prédéfinie d'allocation d'un registre disponible.

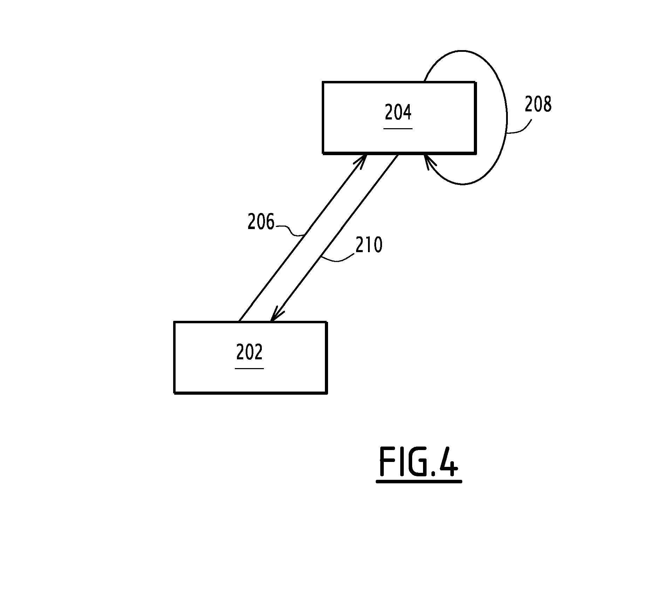

Plus précisément, et comme illustré sur la figure 4, un équipement de surveillance 202 est adapté pour engendrer des requêtes prédéfinies d'allocation et à adresser celles-ci vers un calculateur embarqué 204 en utilisant le protocole mode S lors d'une transmission 206. Ces requêtes ont une forme prédéfinie exposée dans la suite.

Le module 18B est propre à inscrire la correspondance entre le registre alloué et l'adresse dans la table de correspondance 19.

Ainsi, en fonctionnement normal, le module 18A du calculateur embarqué 204 place dans chaque registre identifié la valeur de l'adresse qui lui est allouée à l'étape 208 et renvoie vers le sol, dans le registre normalement disponible correspondant, la valeur de l'adresse correspondante précisée dans la table 19 lors d'un message descendant de réponse DF noté 210 sur la figure 4.

Les correspondances établies entre des registres normalement disponibles et les adresses sont propres à permettre d'assurer un suivi appelé « trace » depuis le sol de différentes données de fonctionnement du calculateur normalement non suivies par transmission de ces données vers le sol pour analyse dans les registres normalement disponibles.

Ces données, dont le suivi est assuré, sont essentiellement de trois types :
- Les données de base

Ces données correspondent à des éléments gérés par le logiciel. La télémesure de ces données est mise en oeuvre à partir de leurs adresses. Un plan de la mémoire permet à tout moment de disposer de cette information. Ce type de fonctionnement requiert une phase unique de programmation permettant la gestion de ces traces.
- Les configurations spécifiques

Ces configurations spécifiques sont dédiées à des fonctionnalités type TCAS (Traffic Collision Avoidance System ou système d'alerte de trafic et d'évitement de collision). Ce type de télémesure est également mis en oeuvre pour récupérer des informations de performance préalablement calculées. Ce type de fonctionnement requiert une phase de programmation pour la mise au point de chacune de ces configurations spécifiques.
- La comptabilisation d'occurrences de processus

Il s'agit ici de comptabiliser la fréquence d'appel de certains processus du logiciel. Ce type de fonctionnement requiert une phase de programmation unique permettant d'une part d'identifier les processus susceptibles d'être suivis et d'autre part de mettre en oeuvre la logique de comptabilisation.

Le module 18A est propre à retrouver ces données, après qu'elles aient été requises depuis l'équipement 60 par une requête de suivi à une fréquence, cohérente de la fréquence d'interrogation utilisée, par exemple de 50Hz.

La requête prédéfinie de suivi est contenue dans les 16 bits du sous-champs SD des interrogations UF libres, à savoir les interrogations UF 4, UF 5, UF 20 et UF 21.

Le champ DI (Identification d'indicatif) de 3 bits sert à identifier la structure du sous-champ SD (Indicatif Spécial) de 16 bits. Les valeurs 4, 5 et 6 sont encore non assignées par la spécification et notamment l'Annexe 10 Vol 4 AOCI §3.1.2.6.1.3 et §3.1.2.6.1.4. En conséquence, une de ces trois valeurs est utilisée pour les besoins de télémesure. Cette valeur est configurable et peut évoluer si nécessaire).

Le contenu des sous-champs SD constitue des ordres pour le module 18A qui se charge de l'exécution. Trois modes d'interrogations sont prévus correspondants aux types de données à suivre.

Ainsi, suivant un premier mode, les valeurs de certaines adresses sont suivies et renvoyées au sol à fréquence régulière.

A cet effet, les ordres de 16 bits suivants sont disponibles :

### Mode « Données de base » : 0001

| | | | |
|---|---|---|---|
| 0001 | 0000 | 0000 0001 | Identifier la trace avec le numéro 1 |
| 0001 | 0001 | 0000 0001 | Supprimer la trace identifiée 1 |
| 0001 | 0010 | yyyy yyyy | Entrée de l'adresse (bits 0 à 7) à suivre pour la trace |
| 0001 | 0011 | yyyy yyyy | Entrée de l'adresse (bits 8 à 15) à suivre pour la trace |
| 0001 | 0100 | yyyy yyyy | Entrée de l'adresse (bits 16 à 23) à suivre pour la trace |
| 0001 | 0101 | yyyy yyyy | Entrée de l'adresse (bits 24 à 32) à suivre pour la trace |
| 0001 | 0110 | yyyy yyyy | Entrée du numéro de BDS(*) choisi pour la mesure |
| 0001 | 0111 | yyyy yyyy | Entrée du numéro du champ (1 à 3) pour le BDS choisi |
| 0001 | 1110 | 0000 0001 | Lancer le suivi de la trace numéro 1 |
| 0001 | 1111 | 00000001 | Arrêter le suivi de la trace numéro 1 |

| | | | |
|---|---|---|---|
| (*) le BDS correspond à un des nombreux (plus de 50 restants) registres 32 bits comm-**B D**ata **S**egment non encore assignés parmi les 256 registres existants. | | | |

Suivant un second mode, les valeurs d'un groupe d'adresses sont renvoyées au sol. Ces groupes d'adresses correspondent chacun à une configuration. Une configuration est un ensemble cohérent et synchronisé de données adressables, et ce pour une mission donnée du type TCAS. Chaque configuration et les adresses correspondantes sont mémorisées dans le calculateur et les ordres assurent la sélection d'un groupe. Ils sont par exemple :

### Mode « configuration spécifique » : 0010

mode sous-mode

| | | | |
|---|---|---|---|
| 0010 | 0000 | 0000 0001 | Identifier la trace de config. avec le numéro 1 |
| 0010 | 0001 | 0000 0001 | Supprimer la trace de config. identifiée 1 |
| 0010 | 0010 | yyyy yyyy | Entrée du numéro de config. à suivre pour la trace |
| 0010 | 0011 | yyyy yyyy | Entrée du numéro de BDS choisi pour la mesure |
| 0010 | 0100 | yyyy yyyy | Entrée du numéro du champ (1 à 3) pour le BDS choisi |

| | | | |
|---|---|---|---|
| 0010 | 1110 | 0000 0001 | Lancer le suivi de la trace de config. numéro 1 |
| 0010 | 1111 | 0000 0001 | Arrêter le suivi de la trace de config. numéro 1 |

Suivant un troisième mode, il est possible de vérifier la séquence d'appel d'un ou plusieurs processus, un processus étant un bloc d'instructions, simple ou complexe. Chaque processus et les instructions qui le forment sont mémorisés dans le calculateur et les ordres assurent la sélection d'un processus. Les ordres suivants correspondent au traitement à réaliser pour une trace donnée.

### Mode « comptabilisation processus » : 0011

| | | | |
|---|---|---|---|
| 0011 | 0000 | 0000 0001 | Identifier la trace de processus avec le numéro 1 |
| 0011 | 0001 | 0000 0001 | Supprimer la trace de processus identifiée 1 |
| 0011 | 0010 | yyyy yyyy | Entrée du numéro de processus à suivre pour la trace |
| 0011 | 0011 | yyyy yyyy | Entrée du numéro de BDS(*) choisi pour la télémesure |
| 0011 | 0100 | yyyy yyyy | Entrée du numéro du champ (1 à 3) pour le BDS choisi |
| 0011 | 1110 | 0000 0001 | Lancer le suivi de la trace de processus numéro 1 |
| 0011 | 1111 | 0000 0001 | Arrêter le suivi de la trace de processus numéro 1 |

A titre d'exemple, les ordres suivants sont utilisés pour espionner la donnée de base se situant à l'adresse 0xDCA3 et rafraîchir avec sa valeur le deuxième champ de 16 bits du registre BDS numéro 0x11.
(*) le BDS correspond à un des nombreux (plus de 50 restants) registres 32 bits comm-**B** Data **S**egment non encore assignés parmi les 256 registres existants.

Espionner la donnée se situant à l'adresse 0xDCA3
→ 0001 0000 0000 0001 Identifier la trace numéro 1
→ 0001 0010 1010 0011 Entrée de l'adresse (bits 0 à 7) à suivre (0xA3)
→ 0001 0011 1101 1100 Entrée de l'adresse (bits 8 à 15) à suivre (0xDC)

Rafraîchir le deuxième champ du registre BDS 0x11 avec la valeur de la donnée
→ 0001 0110 0001 0001 Entrée du numéro de BDS choisi (0x11)
→ 0001 0111 0000 0010 Entrée du numéro du champ 2 du BDS choisi
→ 0001 1110 0000 0001 Lancer le suivi de la trace numéro 1

A partir de cette étape, il est possible de :
Supprimer la trace 1 (arrêtant du même coup l'éventuelle mesure en cours
   → 0001 0001 0000 0001 Supprimer la trace numéro 1
Modifier la trace 1 (arrêtant du même coup l'éventuelle mesure en cours)
   → Suivre les précédentes étapes
Entrer et/ou lancer une nouvelle trace (jusqu'à 255 possibles)
   → Suivre les précédentes étapes
Arrêter le suivi de la trace 1 (tout en conservant la mémorisation de cette trace)
   → 0001 1111 0000 0001 Arrêter le suivi de la trace numéro 1
Verrouiller le mode télémesure (arrêtant et conservant la mémorisation des traces courantes)
   → 0011 0011 1100 1100

Les valeurs des adresses, dont le suivi est assuré, sont reprises dans les registres disponibles des réponses DF et en particulier les registres MB des réponses DF 20 et DF 21.

Cette récupération de données et leur visualisation sont prises en compte par l'extraction des champs Données (56 bits) des réponses Mode S type DF20, DF21 ou autre DF**xx** long identifié comme disponible dans l'annexe 10 de l'OACI et par visualisation directe via des appareils existants type IFR ou enregistrement si nécessaire.

## Revendications

1. Calculateur embarqué (8) pour avion, comportant :
- un processeur (10) propre à exécuter des fonctions opérationnelles conformément à une configuration du calculateur embarqué ;
- des moyens (16) de stockage de la configuration du calculateur embarqué ;
- des moyens (18B, 20) de paramétrage du calculateur embarqué à partir d'informations de paramétrage ;
- une chaîne de transmission (12) en mode S telle que définie par l'ICAO pour la transmission de données opérationnelles du calculateur embarqué vers ou depuis une station au sol ou un autre avion, les données opérationnelles étant traitées par les fonctions opérationnelles exécutées par le calculateur,
**caractérisé en ce que** la chaîne de transmission (12) est propre à assurer, en mode S, la transmission d'informations de paramétrage vers ou depuis les moyens (18B, 20) de paramétrage.

2. Calculateur embarqué (8) selon la revendication 1, **caractérisé en ce que** les moyens (18B, 20) de paramétrage du calculateur comportent des moyens (20) de maintenance propres à agir sur la configuration du calculateur embarqué et **en ce que** les informations de paramétrage sont des informations de maintenance transmises vers ou depuis les moyens (20) de maintenance.

3. Calculateur embarqué selon la revendication 2, **caractérisé en ce que** la chaîne de transmission (12) en mode S est propre à assurer un débit de transmission supérieur pour les données de maintenance au débit de transmission assuré pour les données opérationnelles.

4. Calculateur embarqué selon la revendication 3, **caractérisé en ce que** la fréquence de transmission de segments des données de maintenance en mode S est supérieure à 100Hz.

5. Calculateur embarqué selon l'une quelconque des revendications 2 à 4, **caractérisé en ce que** la chaîne de transmission (12) comporte un processeur (28) comportant des moyens distincts (32, 34) de traitement des données opérationnelles et des données de maintenance et **en ce que** le calculateur embarqué comporte des moyens d'activation exclusive, soit des moyens (32) de traitement des données opérationnelles, dans un mode opérationnel, soit des moyens (34) de traitement des données de maintenance, dans un mode de maintenance.

6. Calculateur embarqué selon l'une quelconque des revendications 2 à 5, **caractérisé en ce que** la chaîne de transmission (12) est propre à assurer des transactions en mode S niveau 2 de type COMM-A/COMM-B avec des interrogations/réponses longues parmi les formats de réserve définis par l'ICAO.

7. Calculateur selon la revendication 1, **caractérisé en ce que** les moyens (18B,20) de paramétrage du calculateur comportent des moyens (18B) d'allocation, en réponse à une requête prédéfinie d'allocation, d'un registre disponible tel que défini par l'ICAO à une adresse mémoire du calculateur dont la valeur doit être transmise par la chaîne de transmission (12) en mode S en tant que données opérationnelles supplémentaires contenue dans le registre alloué et **en ce que** les informations de paramétrages sont au moins une requête prédéfinie d'allocation transmises aux moyens (18B) d'allocation.

8. Calculateur selon la revendication 7, **caractérisé en ce que** la requête d'allocation comporte des adresses et des registres associés et **en ce que** les moyens (18B) d'allocation sont propres à allouer, à chaque adresse, le registre associé.

9. Calculateur selon la revendication 7 ou 8, **caractérisé en ce que** le calculateur comporte une mémoire de configurations et chaque configuration spécifie un ensemble d'adresses du calculateur, et **en ce que** la requête d'allocation comporte une identification d'une configuration et un registre associé et **en ce que** les moyens (18B) d'allocation sont propres à allouer le registre associé à toutes les adresses spécifiées par la configuration de sorte que les valeurs simultanées de toutes les adresses de la configuration sont transmises ensemble en mode S en tant que données opérationnelles.

10. Calculateur selon l'une quelconque des revendications 7 à 9, **caractérisé en ce que** le calculateur comporte une mémoire de processus et chaque processus spécifie une adresse du calculateur, et **en ce que** la requête d'allocation comporte une identification d'un processus et un registre associé et **en ce que** les moyens (18B) d'allocation sont propres à allouer le registre associé à l'adresse spécifiée d'identification du processus de sorte que la valeur de l'adresse du processus soit transmise en mode S en tant que donnée opérationnelle.

11. Installation comportant :
- un calculateur embarqué (8) selon l'une quelconque des revendications précédentes ; et
- un équipement de paramétrage (60) propre à communiquer suivant une liaison mode S avec le calculateur embarqué par l'échange de données de paramétrage.
